# EUROPÄISCHE PATENTANMELDUNG

(11) **EP 0 806 144 A2**
(43) Veröffentlichungstag der Anmeldung: **12.11.1997**
(21) Anmeldenummer: 97810293.7
(22) Anmeldetag: 09.05.1997
(51) Int. Cl.: A21D 8/04

(54) **Herstellung eines flüssigen bzw. pastösen biologischen Back-mittels für Brot mit Hilfe von Milchsäurebakterien sowie danach hergestelltes biologisches Backmittel**

(30) Priorität: 11.05.1996 DE 19619187
(71) Anmelder: AGRANO AG, CH-4123 Allschwil (CH)
(72) Erfinder: Ehret, Aloyse, 68730 Blotzheim (CH)
(74) Vertreter: Rottmann, Maximilian R.

(57) **Zusammenfassung**

Die vorliegende Erfindung betrifft ein Verfahren zur Herstellung eines flüssigen oder pastösen biologischen Backmittels mit lebenden Milchsäurebakterienarten. Sie wird dadurch gekennzeichnet, dass das gesamte Nährmedium als Backmittel dient. Zur Herstellung des Nährmediums werden Getreiderohstoffe gemischt und mindestens eine Amylase und mindestens eine Amyloglucosidase zugegeben, wobei das Medium zuerst 20 Minuten auf 75°C und dann auf 55°C abgekühlt und nach Zugabe von mindestens 2 Proteasen 2 Stunden bei dieser Temperatur gehalten wird, woran sich dann die Sterilisation des Nährmediums anschliesst. Das Nährmedium wird danach mit den in der Erfindung genannten Milchsäurebakterienarten beimpft. Dem erfindungsgemässen Backmittel werden noch Ascorbinsäure, α - Amylasen und Malzmehl beigegeben.

## Beschreibung

Die Erfindung betrifft die Herstellung eines flüssigen oder pastösen biologischen Backmittels mit Hilfe von Milchsäurebakterien, dem, je nach Anwendung und Brotrezeptur noch Enzyme, Malzmehl und Ascorbinsäure oder ascorbinsäurehaltige Fruchtpulver zugegeben werden können, sowie ein danach hergestelltes biologisches Backmittel.

Weizen- und Roggenbrote sowie Hefegebäcke werden heute unter Einsatz von verschiedenen Zusatzstoffen hergestellt. In den klassischen Verfahren werden Vorteige zur Verbesserung des Geschmackes und der Teiglockerung verwendet. Als Teigsäuerungsmittel und Geschmacksverbesserer sind gefriergetrocknete Lactobazillen, gefriergetrockneter Sauerteig, inaktive Gärflüssigkeit von Lactobazillen und chemisch hergestellte organische Säuren im Einsatz. Beim Gefriertrocknen gehen wesentliche flüchtige Aromakomponenten verloren. Alle eingesetzten Mikroorganismen werden unter Zusatz von chemisch hergestellten Nähr- und Wuchsstoffen gezüchtet. Getrocknete Mikroorganismen müssen erst revitalisiert werden. Durch die zum Teil fehlenden Enzyme zum Abbau von Getreideinhaltsstoffen kommt es zum verzögerten Wachstum (Lag-Phase). Mit Ausnahme von gefriergetrocknetem Sauerteig fehlt allen eingesetzten Zusatzstoffen der typische Brotgeschmack.Getrockneter Sauerteig muss bis zu 20% (bezogen auf den Mehlanteil) dem Teig zugesetzt werden.

Aufgabe der vorliegenden Erfindung ist es, ein biologisches Backmittel herzustellen, welches gegenüber den bekannten Backmitteln den Vorteil aufweist, dass es keine chemischen Zusätze enthält, dass es ohne Zugabe von Microorganismen, die unter Zusatz von chemisch hergestellten Nähr- und Wuchsstoffen gezüchtet wurden, auskommt, dass diese Microorganismen nicht revitalisiert werden müssen, dass kein verzögertes Wachstum auftritt, dass der typische Brotgeschmack erzielt wird, und dass eine wesentlich geringere Dosierung der Zugabemenge an getrocknetem Sauerteig erforderlich ist.

Die Lösung der vorstehend geschilderten Aufgaben wird durch die Merkmale des kennzeichnenden Teils des Anspruchs 1 ermöglicht.

Weitere Ausführungsformen des erfindungsgemässen Verfahrens sind in den Unteransprüchen beschrieben.

Das erfindungsgemässe biologische Backmittel in flüssiger oder pastöser Form vermeidet die Nachteile der z.Z. verwendeten Zusatzstoffe. Die Milchsäurebakterien-Arten werden auf Getreiderohstoffen, vorzugsweise aus biologisch-kontroliertem Anbau, gezüchtet. Das Medium enthält keine chemischen Zusätze. Während der Fermentation entstehen die für die Teigreifung typischen Aromastoffe. Da kein Konzentrierungsschritt stattfindet, gelangen alle Aromastoffe in den Teig und damit in die Brote. Die lebenden Milchsäurebakterien haben bereits die zum Abbau der Getreiderohstoffe nötigen Enzymsysteme aktiviert und können ohne Verzögerung ihren Stoffwechsel im Teig weiterführen. Je nach Teigart und Teigführung wird durch die Aromabildung und Teiglockerung in kurzer Zeit deutlich verbessert. Die Dosierung kann je nach Teigart 1% - 10%, vorzugsweise 2% - 6% (bezogen auf den Mehlanteil) betragen.

Das erfindungsgemässe biologische Backmittel ist zur Verbesserung aller durch mikrobiologische Vorgänge gelockerten Teige geeignet:
Weizenbrote, Weizensüssteige und Weizenmischbrote (Roggenmehlanteil bis 40%): Als Vorteigersatz (Hebel), mit Zugabe von Enzymen, Malzmehl und/oder Ascorbinsäure oder Fruchtpulver anstelle von konventionellen Backmitteln, zur Verbesserung der Teiglockerung, zur Intensivierung des Brotaromas, zur Standardisierung der Brotqualität.

Roggenbrote und Roggenmischbrote (ab 40% Roggenmehlanteil): Als Starterkultur für den Sauerteig, zur Verbesserung der Teiglockerung, zur Intensivierung des Aromas, zur Standardisierung der Brotqualität.

Das Backmittel gemäss Erfindung ist dadurch gekennzeichnet, dass mindestens 1 Milchsäurebakterienstamm, vorzugsweise ein Gemisch aus mehreren Milchsäurebakterienarten, in einem durch enzymatische Hydrolyse aufgeschlossenen Getreiderohstoff, vorzugsweise aus biologisch-kontrolliertem Anbau, gezüchtet werden. Die Hydrolyse der Getreiderohstoffe, welche vorzugsweise Weizenmehl und Weizenkeime sind, erfolgt durch mindestens 1 Amylase sowie mindestens 1 Amyloglucosidase und mindestens zwei Proteasen, wovon eine Protease überwiegend endoproteolytische Eigenschaften aufweist. Als weitere Stickstoffquelle kann ein, mit ausschliesslich physikalischen Methoden hergestellter, Bierhefeextrakt eingesetzt werden. Das aufgeschlossene Nährmedium wird sterilisiert, und die Züchtung erfolgt unter Sterilbedingungen. Dem Nährmedium und damit dem Backmittel werden keine chemischen Nähr- oder Hilfsstoffe zugesetzt, insbesondere erfolgt auch keine Kontrolle des pH-Wertes.

Die Herstellung des Nährmediums ist von entscheidender Bedeutung für den Geschmack des Backmittels und damit der daraus hergestellten Brote.

Das erfindungsgemässe Verfahren ist weiterhin dadurch gekennzeichnet, dass keine Konzentrierung oder Haltbarmachung erfolgt. Das Medium wird mit allen Aromakomponenten und den lebenden Lactobazillen den Teigen zugegeben. Die Haltbarkeit bis zu 6 Wochen wird durch Kühllagerung erreicht. Zur Verhinderung der Sedimentation können der Lösung noch Hydrokolloide wie in nachfolgender, nicht abschliessender Liste, genannt, zugeführt werden (niederverestertes Pektin + Ca-Salz, Quellmehle, Guarmehl).

Vorzugsweise benuzt werden Milchsäurebakterien der Arten Lactobazillus, Leuconostoc und/oder Pediococcus, vorzugsweise einem Stamm Lactobazillus brevis, Lactobazillus plantarum, Leuconostoc mesenteroides und/oder Pediococcus pentosaceus und speziell eine oder mehrere Stämme von Lactobazillus brevis DSM 9209, Lactobazillus plantarum DSM 9208, Leuconostoc mesenteroides DSM 9207, und Pediococcus pentosaceus DSM 9210 benutzt. Diese Stämme wurden aus Weizensauerteig isoliert. Die Merkmale der genannten Stämme sind in den Tabellen 1a und 1b zusammengefasst.

### Beispiele;

### 1. Zubereitung eines geeigneten Nährmediums für die Milchsäurebakterien

In einem Bioreaktor, der 15 Liter fasst, mischt man 9 Liter Wasser, 600 g Bio-Weizenkeime, 380 g gemahlene Bio-Weizenkörner, 20 g Bierhefeextrakt, 1 ml Alpha-Amylase-Lösung (16 Einheiten RAU/gramm) zur Hydrolyse der Stärke. Die Mischung wird während 20 Minuten auf 75°C gehalten und anschliessend auf 55°C abgekühlt. Man fügt 6 ml Amyloglucosidase-Lösung (17,6 AGi/g), 0,12 ml multi-aktives β-Glucanase Präparat (45 FBG/g), 2 ml Endoprotease (2,4 AU/g) und 3 ml Exopeptidase (800 LAPU/g) dazu. Die Tätigkeit der Enzyme dauert 120 Minuten. Das erhaltene Nährmedium wird während 20 Minuten bei 120°C sterilisiert. Dieses Medium wird bei 4°C gelagert und zur Fermentation der Milchsäurebakterien eingesetzt.
Die freigesetzten Zucker werden durch eine leistungsstarke HPLC analysiert. Die durch Hydrolyse der Proteine freigesetzten Aminosäuren werden durch die Reaktion mit Ninhydrin analysiert (S. Moore und W.H. Stein, J. Biol. Chem. 176,367,1948).

Die erhaltenen mittleren Werte sind:

| | |
|---|---|
| Maltose ca. | 8 g/l |
| Glucose ca. | 50 g/l |
| Aminosäuren ca. | 15 g/l |

Zu keinem Zeitpunkt der Zubereitung des Mediums werden chemische Zusätze zugefügt. Der pH-Wert des Mediums liegt bei 6,0; z. B. 5,5 - 6,5.

### 2. Fermentation der Mikroorganismen

Die für ihren Stoffwechsel und für ihre sensorischen Eigenschaften ausgewählten Milchsäurebakterien Stämme werden bei - 80°C konserviert. Bei der Benutzung werden sie auf festes Getreidemedium umgesetzt (vorher beschriebenes Nährmedium 15 g/l Bactoagar).
Zwei Kulturen werden successive im Nährmedium gezüchtet. Die erste Kultur wird anhand einer isolierten Kolonie in 100 ml Medium angeimpft, (24 Stunden kultiviert bei 30°C ungeschüttelt). Die zweite Kultur wird in 900 ml neues Nährmedium umgesetzt, das mit 100 ml der vorhergehenden Kultur beimpft wird (24 Stunden kultiviert bei 30 °C ungeschüttelt). Diese Kultur dient dazu, zu der gewünschten Zeit und in der gewünschten Konzentration den Bioreaktor zu beimpfen.

Die Eigenschaften der benutzten Milchsäurebakterien Stämme in reiner Kultur im Nährmedium sind in der Tabelle 2a aufgezeigt. Einige Beispiele von gemischter oder sequenziell gemischter Kultur sind in den Tabellen 2b und 2c erfasst. Diese Beispiele sind ein Kompromiss, der als Ziel hat, genügend angeimpfte Milchsäurebakterien zu produzieren und in dem Brot ein charakteristisches Aroma und einen typischen Säuregehalt zu erhalten. Die Beimpfung mit Milchsäurebakterien in gewünschter Zeit und gewünschter Menge erlaubt die Konzentration der verschiedenen Mikroorganismen zu regulieren und somit die sensorischen Eigenschaften des Endprodukts zu beeinflussen. (Beispiele: siehe Tabellen 2b und 2c).

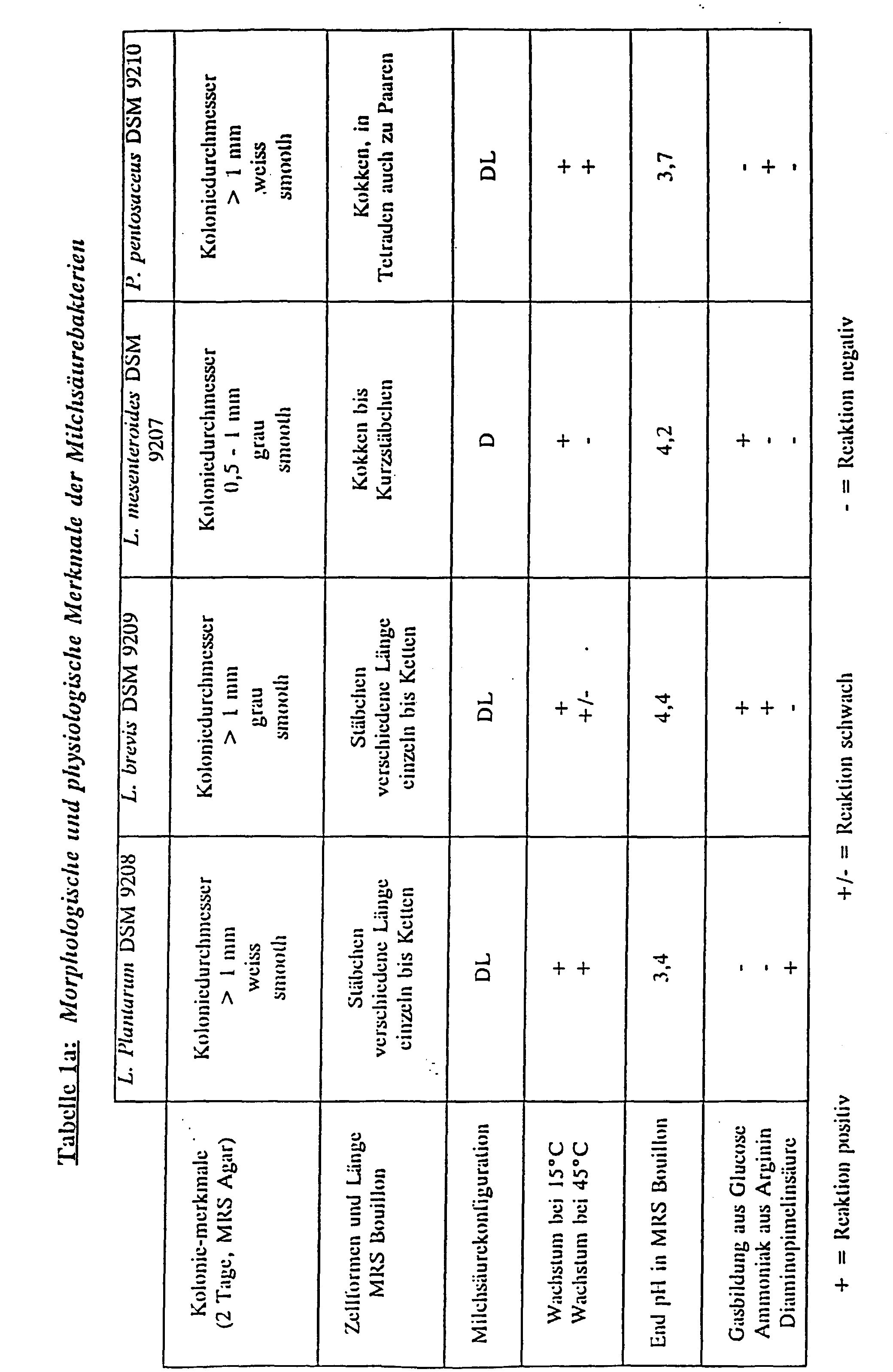

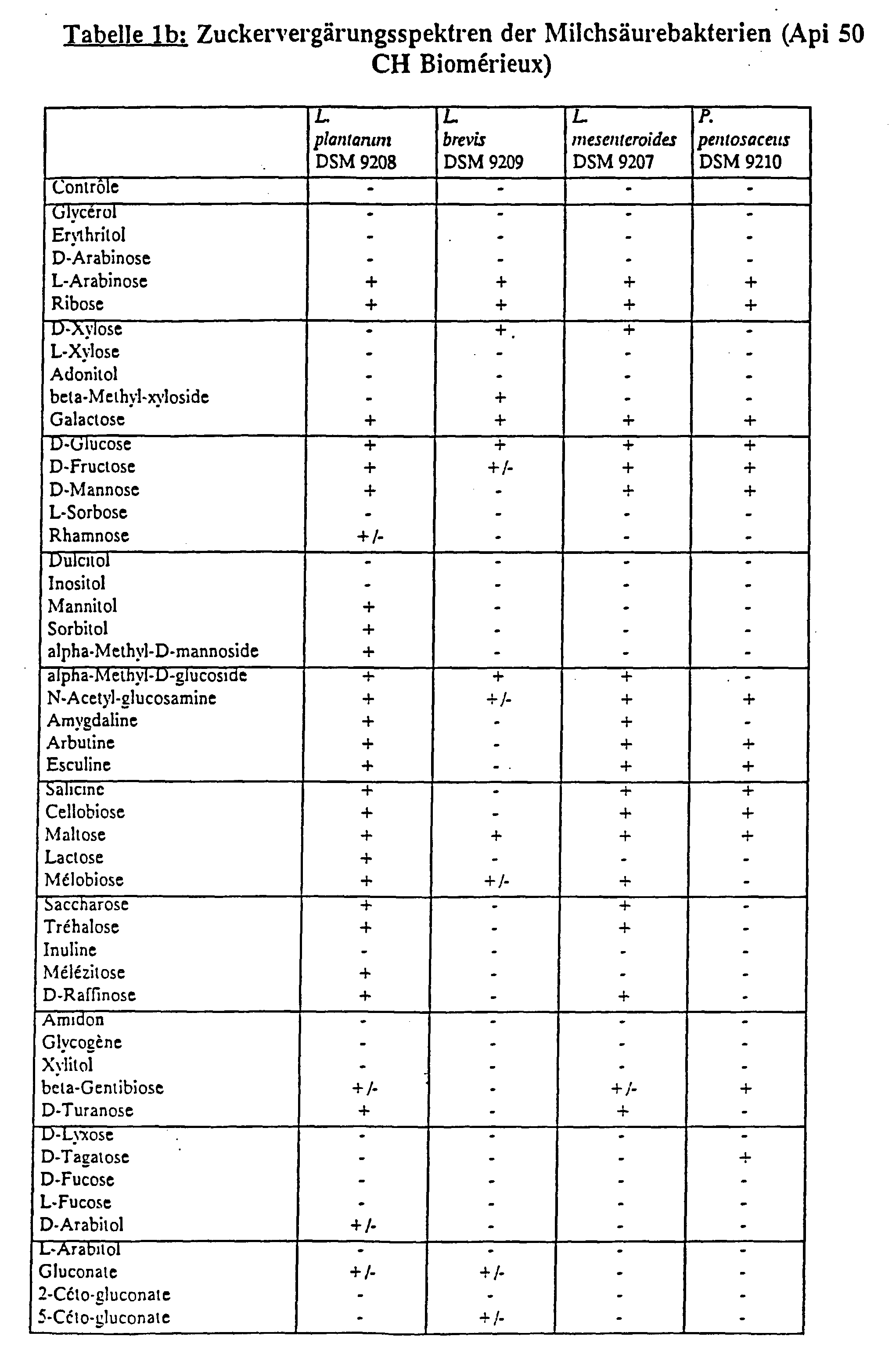

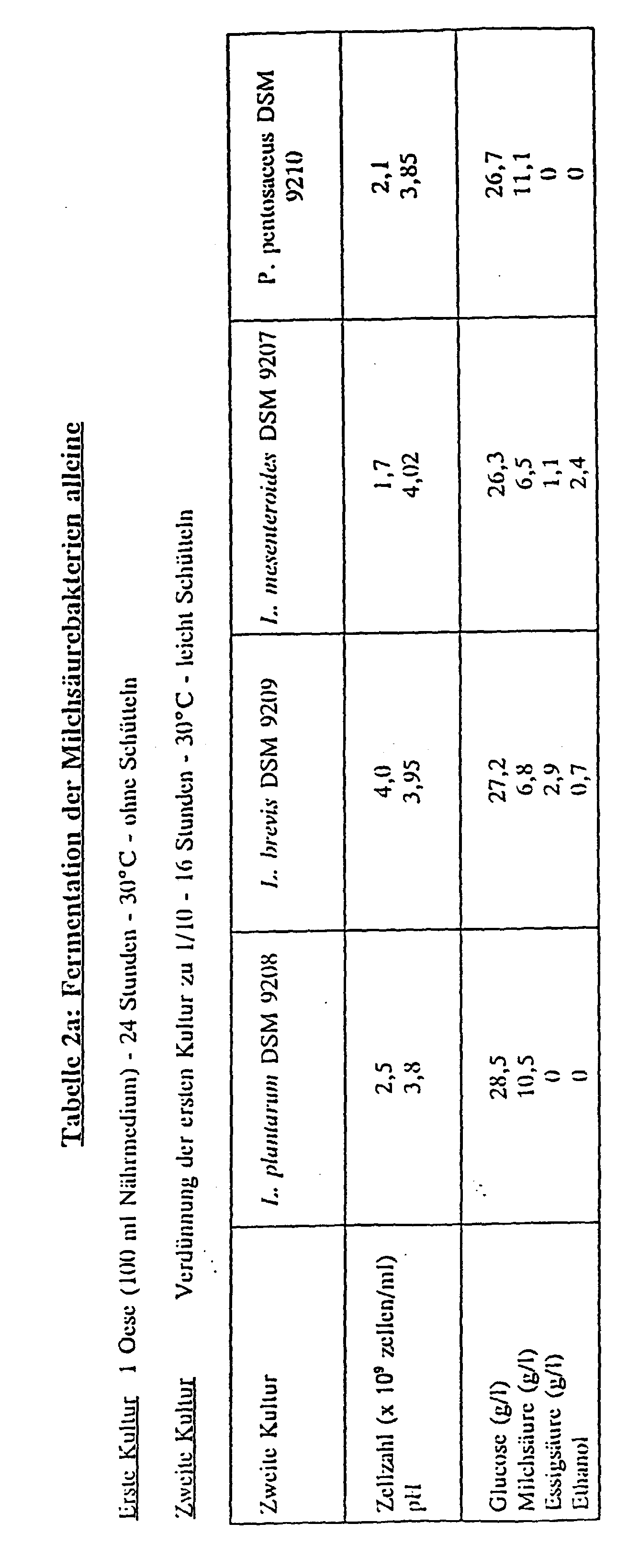

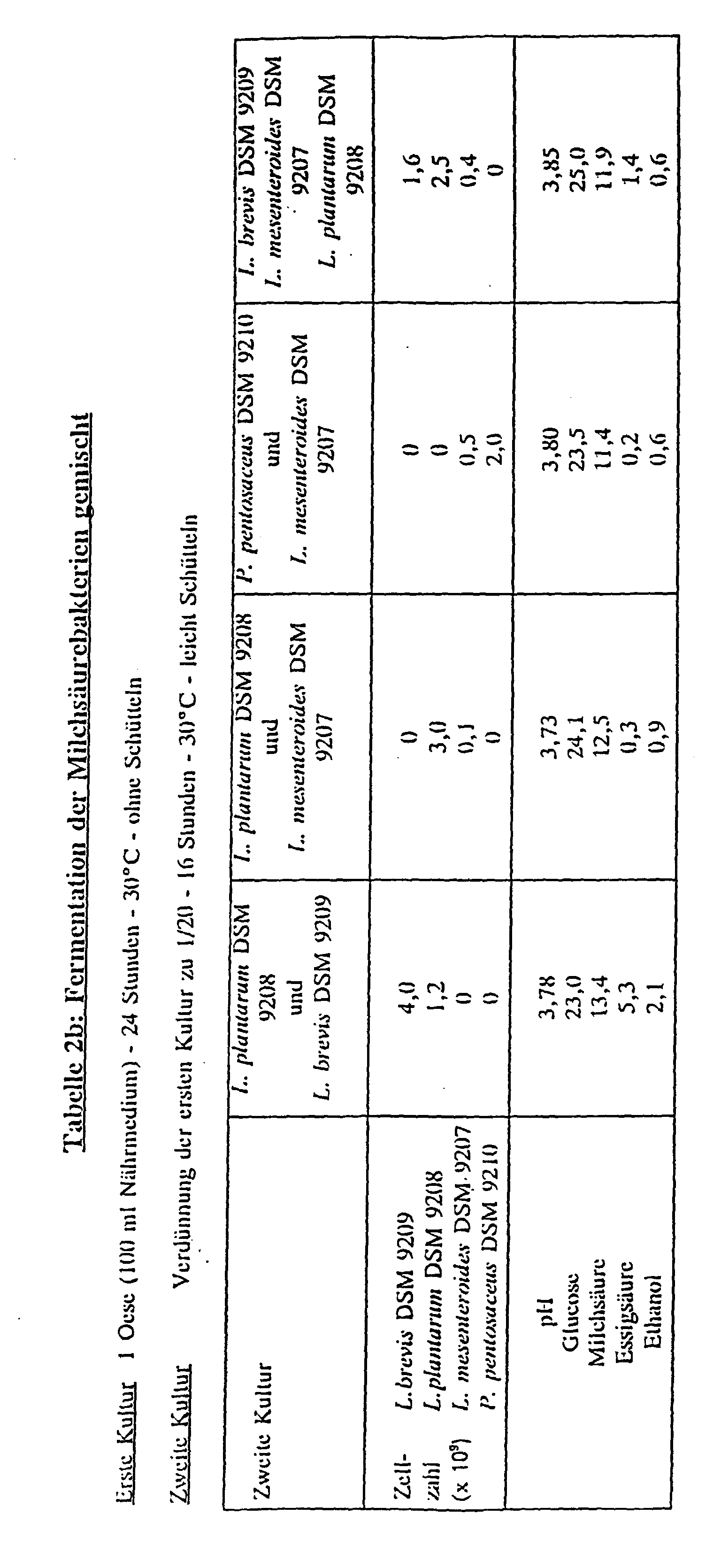

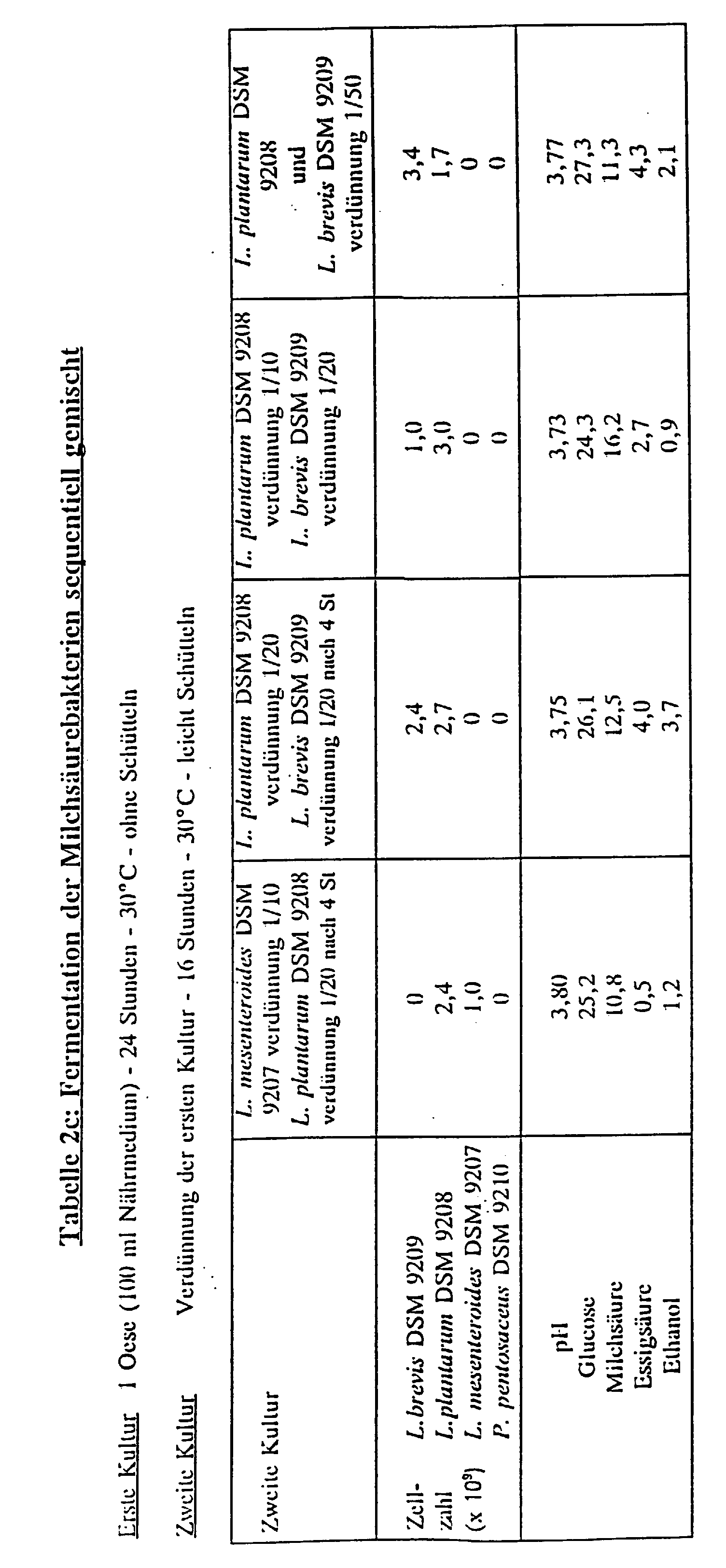

## Patentansprüche

1. Verfahren zur Herstellung eines flüssigen oder pastösen biologischen Backmittels, dadurch gekennzeichnet, dass Getreiderohstoffe und Bierhefeextrakt gemischt werden und mindestens eine Amylase und mindestens eine Amyloglucosidase zugegeben wird, wobei das Medium zuerst 10 - 30 Minuten auf 50 - 80°C aufgeheizt, dann auf 55°C abgekühlt und nach Zugabe von mindestens 2 Proteasen 30 Minuten - 4 Stunden bei dieser Temperatur gehalten wird, woran sich dann die Sterilisation und Fermentation zu dem Backmittel mit Hilfe von einer oder mehrerer Milchsäurebaktereienarten anschliesst.

2. Verfahren gemäss Anspruch 1, gekennzeichnet dadurch, dass die Züchtung der Milchsäurebakterien-Kulturen diskontinuierlich durchgeführt werden.

3. Verfahren nach einem der Ansprüche 1 bis 2, gekennzeichnet dadurch, dass die Züchtung der Milchsäurebakterienarten ohne pH-Regelung durchgeführt wird.

4. Verfahren nach einem der Ansprüche 1 bis 3, gekennzeichnet dadurch, dass die eingesetzten Milchsäurebakterien solche der Arten Lactobazillus, Leuconostoc und/oder Pediococcus sind.

5. Verfahren nach einem der Ansprüche 1 bis 4, gekennzeichnet dadurch, dass die eingesetzten Milchsäurebakterien solche der Stämme Lactobazillus brevis, Lactobazillus plantarum, Leuconostoc mesenteroides und/oder Pediococcus pentosaceus sind.

6. Verfahren nach einem der Ansprüche 1 bis 5, gekennzeichnet dadurch, dass die eingesetzten Milchsäurebakterien aus einem oder mehreren Stämmen Lactobazillus brevis die DSM 9209, Lactobazillzus plantarum DSM 9208, Leuconostoc mesenteroides DSM 9207 und Pediococcus pentosaceus DSM 9210 sind.

7. Verfahren nach einem der Ansprüche 1 bis 6, gekennzeichnet dadurch, dass es sich bei den Getreiderohstoffen um Keime und Mehle, gegebenenfalls in Mischungen, handelt.

8. Verfahren nach einem der Ansprüche 1 bis 7, gekennzeichnet dadurch, dass das Medium zuerst 20 Minuten auf 75°C aufgeheizt und dann auf 55°C und nach Zugabe von mindestens 2 Proteasen 2 Stunden bei dieser Temperatur gehalten wird.

9. Benutzung der gemäss einem der Ansprüche 1 bis 8 erhaltenen biologisch-aktiven Lösungen als Backmittel vorzugsweise als Vorteig oder Starterkultur für die Brotherstellung.

10. Das vorzugweise biologische Backmittel gemäss den Ansprüchen 1 bis 9 enthält ein oder mehrere stärkeabbauende Enzyme (Amylasen).

11. Das Backmittel gemäss der Ansprüche 1 bis 10 enthält das Enzym Glucoseoxidase.

12. Das Backmittel gemäss den Ansprüchen 1 bis 11 wird dadurch gekennzeichnet, dass Ascorbinsäure oder ascorbinsäurehaltiges Fruchtpulver zugesetzt werden.

13. Verfahren nach den Ansprüchen 1 bis 12, dadurch gekennzeichnet, dass eine Dosierung von 1 bis 10% vorzugsweise von 2 bis 6% (bezogen auf den Mehlanteil), erfolgt.

14. Das Backmittel, gemäss den Ansprüchen 1 bis 13, wird dadurch gekennzeichnet, dass enzymaktive oder enzyminaktive Malzmehle oder Malzextrakte zugesetzt werden können.
